(19) Europäisches Patentamt
European Patent Office
Office européen des brevets

(11) EP 3 579 445 A1

(12) EUROPEAN PATENT APPLICATION
published in accordance with Art. 153(4) EPC

(43) Date of publication:
11.12.2019 Bulletin 2019/50

(51) Int Cl.:
H04B 7/0456 (2017.01)

(21) Application number: 18771700.4

(22) Date of filing: 24.03.2018

(86) International application number:
PCT/CN2018/080384

(87) International publication number:
WO 2018/171780 (27.09.2018 Gazette 2018/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.03.2017 CN 201710184942

(71) Applicant: Huawei Technologies Co., Ltd.
Longgang District
Shenzhen, Guangdong 518129 (CN)

(72) Inventor: LIU, Jianqin
Shenzhen
Guangdong 518129 (CN)

(74) Representative: Thun, Clemens
Mitscherlich PartmbB
Patent- und Rechtsanwälte
Sonnenstraße 33
80331 München (DE)

(54) **METHOD, APPARATUS AND SYSTEM FOR SENDING SIGNALLING**

(57) Embodiments of the present invention provide a signaling sending method, an apparatus, and a system, to improve transmission efficiency and save air interface resources. According to a first aspect, an embodiment of the present invention provides a signaling sending method. A base station determines a first precoding matrix indication PMI1 and a second precoding matrix indication PMI2, where the PMI1 and the PMI2 are used to indicate a precoding matrix. The base station sends first signaling to user equipment, where the first signaling includes the PMI1. The base station sends second signaling to the user equipment, where the second signaling includes the PMI2.

FIG. 1

EP 3 579 445 A1

**Description**

This application claims priority to Chinese Patent Application No. 201710184942.3, filed with the Chinese Patent Office on March 24, 2017 and entitled "SIGNALING SENDING METHOD, APPARATUS, AND SYSTEM", which is incorporated herein by reference in its entirety.

**TECHNICAL FIELD**

The present invention relates to the field of communications technologies, and in particular, to a signaling sending method, an apparatus, and a system.

**BACKGROUND**

Usually, a signal transmission model of a wireless communications system may be based on the following mathematical formula:

$$y = HWx + n$$

where x represents a to-be-transmitted signal; H represents a channel matrix, and is used to represent a characteristic of a channel; W is a precoding matrix, and is used to indicate a precoding matrix for precoding the to-be-transmitted data before the to-be-transmitted data is transmitted by using a channel H; n represents noise; and y represents a signal received on a receive side. The precoding matrix W is usually determined through measurement. For example, a process of determining a precoding matrix of uplink data may be that a transmit end sends one or more reference signals, a receive end measures the reference signals, and the receive end determines one or more optimal precoding matrices based on a measurement result of the reference signals. The receive end may send a precoding matrix indication PMI to the transmit end based on the measurement result. In some cases, the PMI may not be determined based on the measurement result, for example, a core network element configures or another network device directly notifies the PMI sent by the receive end. The receive end may send the PMI in different forms. In some cases, a specific form of sending the PMI is related to an expression form of the precoding matrix W. For example, in a double codebook form in uplink data transmission, the receive end sends two precoding matrix indications PMI1 and PMI2, where the PMI1 is corresponding to a codeword W1 in one codebook C1, and the PMI2 is corresponding to a codeword W2 in another codebook C2. After receiving the PMI1 and the PMI2, the transmit end finds the corresponding codewords W1 and W2 from stored codebooks C1 and C2, and obtains channel information based on a predetermined function rule F(W1, W2). In addition, there are a plurality of codebook sending forms on a user equipment side.

However, to send the PMI1 and the PMI2 in an uplink transmission manner, a downlink transmission manner is usually used, and consequently a signaling structure and flexibility are restricted to some extent. In some scenarios, for example, when a frequency selective PMI indication, a double codebook structure, or a notification of a plurality of PMIs is supported in uplink transmission, sending in the existing downlink transmission manner not only causes a waste of downlink control signaling, but also leads to insufficient accuracy of sending.

**SUMMARY**

Embodiments of the present invention provide a signaling sending method, an apparatus, and a system, so as to improve transmission efficiency and save air interface resources.

According to a first aspect, an embodiment of the present invention provides a signaling sending method. A base station determines a first precoding matrix indication PMI1 and a second precoding matrix indication PMI2, where the PMI1 and the PMI2 are used to indicate a precoding matrix. The base station sends first signaling to user equipment, where the first signaling includes the PMI1. The base station sends second signaling to the user equipment, where the second signaling includes the PMI2. In a first possible implementation of the first aspect, the PMI1 is associated with a first frequency granularity, and the PMI2 is associated with a second frequency granularity, where the second frequency granularity is less than or equal to the first frequency granularity. With reference to the first aspect or the first possible implementation of the first aspect, in a second possible implementation, the PMI1 is used to indicate a broadband characteristic of the precoding matrix, and the PMI2 is used to indicate a subband characteristic of the precoding matrix; or the PMI1 is used to indicate a long-term characteristic of the precoding matrix, and the PMI2 is used to indicate a short-term characteristic of the precoding matrix.

With reference to the first aspect or either of the first and the second possible implementations of the first aspect, in a third possible implementation, the sending, by the base station, first signaling to user equipment includes: periodically sending, by the base station, the first signaling to the user equipment. With reference to the first aspect or any one of the first to the third possible implementations of the first aspect, in a fourth possible implementation, the base station sends at least two pieces of first signaling to a user.

The sending, by the base station, second signaling to the user equipment includes: sending, by the base station, at least one piece of second signaling in a time interval between moments at which the base station sends two consecutive pieces of first signaling. With reference to the first aspect or any one of the first to the fourth possible implementations of the first aspect, in a fifth possible implementation, the sending, by the base station, second signaling to the user equipment includes: periodically sending, by the base station, the second signaling to user equipment. With reference to the first aspect or any one of the first to the fifth possible implementations of the first aspect, in a sixth possible implementation, the first signaling is higher layer signaling, and the second signaling is physical layer signaling. With reference to the first aspect or any one of the first to the fifth possible implementations of the first aspect, in a seventh possible implementation, the first signaling is DCI signaling. With reference to the first aspect or any one of the first to the seventh possible implementations of the first aspect, in an eighth possible implementation, the first signaling further includes a rank indication and/or the first signaling further includes the PMI2. According to a second aspect, an embodiment of the present invention provides a signaling receiving method. User equipment UE receives first signaling sent by a base station, and the first signaling includes a first precoding matrix indication PMI1. The UE receives second signaling sent by the base station, where the second signaling includes a first precoding matrix indication PMI2. The PMI1 and the PMI2 are used to indicate a precoding matrix. In a first possible implementation of the second aspect, the user equipment determines a precoding matrix based on the PMI1 and the PMI2. With reference to the second aspect or the first possible implementation of the second aspect, in a second possible implementation, the PMI1 is associated with a first frequency granularity, and the PMI2 is associated with a second frequency granularity, where the second frequency granularity is less than or equal to the first frequency granularity. With reference to the second aspect or either of the first and the second possible implementations of the second aspect, in a third possible implementation, the receiving, by the UE, first signaling sent by a base station includes: periodically receiving, by the UE, the first signaling sent by the base station. With reference to the second aspect or any one of the first to the third possible implementations of the second aspect, in a fourth possible implementation, the UE receives at least two pieces of first signaling sent by the base station.

The receiving, by the UE, second signaling sent by the base station includes: receiving, by the UE, at least one piece of second signaling in a time interval between moments at which the UE receives two consecutive pieces of first signaling.

With reference to the second aspect or any one of the first to the fourth possible implementations of the second aspect, in a fifth possible implementation, the receiving, by the UE, second signaling sent by the base station includes: periodically receiving, by the UE, the second signaling sent by the base station. With reference to the second aspect or any one of the first to the fifth possible implementations of the second aspect, in a sixth possible implementation, the first signaling is higher layer signaling, and the second signaling is physical layer signaling. With reference to the second aspect or any one of the first to the fifth possible implementations of the second aspect, in a seventh possible implementation, the first signaling is DCI signaling. With reference to the second aspect or any one of the first to the seventh possible implementations of the second aspect, in an eighth possible implementation, the first signaling further includes a rank indication and/or the first signaling further includes the PMI2. According to a third aspect, an embodiment of the present invention provides a base station, including: a determining unit, configured to determine a first precoding matrix indication PMI1 and a second precoding matrix indication PMI2, where the PMI1 and the PMI2 are used to indicate a precoding matrix; and a sending unit, configured to send first signaling to user equipment, where the first signaling includes the PMI1, and the sending unit is configured to send second signaling to the user equipment, where the second signaling includes the PMI2. In a first possible implementation of the third aspect, the PMI1 is associated with a first frequency granularity, and the PMI2 is associated with a second frequency granularity, where the second frequency granularity is less than or equal to the first frequency granularity.

With reference to the third aspect or the first possible implementation of the third aspect, in a second possible implementation, the PMI1 is used to indicate a broadband characteristic of the precoding matrix, and the PMI2 is used to indicate a subband characteristic of the precoding matrix. Alternatively, the PMI1 is used to indicate a long-term characteristic of the precoding matrix, and the PMI2 is used to indicate a short-term characteristic of the precoding matrix. With reference to the third aspect or either of the first and the second possible implementations of the third aspect, in a third possible implementation, that the sending unit is configured to send first signaling to user equipment includes: the sending unit is configured to periodically send the first signaling to the user equipment. With reference to the third aspect or any one of the first to the third possible implementations of the third aspect, in a fourth possible implementation, the sending unit is configured to send at least two pieces of first signaling to a user.

That the sending unit is configured to send second signaling to the user equipment includes:

sending, by the sending unit, at least one piece of second signaling in a time interval between moments at which the sending unit sends two consecutive pieces of first signaling. With reference to the third aspect or any one of the first to the fourth possible implementations of the third aspect, in a fifth possible implementation, that the sending unit is configured to send second signaling to user equipment includes:

the sending unit is configured to periodically send the second signaling to the user equipment. With reference to the third aspect or any one of the first to the fifth possible implementations of the third aspect, in a sixth possible implementation, the first signaling is higher layer signaling, and the second signaling is physical layer signaling. With reference to the third aspect or any one of the first to the fifth possible implementations of the third aspect, in a seventh possible implementation, the first signaling is DCI signaling.

With reference to the third aspect or any one of the first to the seventh possible implementations of the third aspect, in an eighth possible implementation, the first signaling further includes a rank indication and/or the first signaling further includes the PMI2. According to a fourth aspect, an embodiment of the present invention provides user equipment UE, where the user equipment includes:

a receiving unit, configured to receive first signaling sent by a base station, where the first signaling includes a first precoding matrix indication PMI1; and the receiving unit is configured to receive second signaling sent by the base station, where the second signaling includes a first precoding matrix indication PMI2, and the PMI1 and the PMI2 are used to indicate a precoding matrix. In a first possible implementation of the fourth aspect, the user equipment further includes:

a determining unit, configured to determine a precoding matrix based on the PMI1 and the PMI2. With reference to the fourth aspect or the first possible implementation of the fourth aspect, in a second possible implementation, the PMI1 is associated with a first frequency granularity, and the PMI2 is associated with a second frequency granularity, where the second frequency granularity is less than or equal to the first frequency granularity. With reference to the fourth aspect or either of the first and the second possible implementations of the fourth aspect, in a third possible implementation, that the receiving unit is configured to receive first signaling sent by a base station includes:

the receiving unit is configured to periodically receive the first signaling sent by the base station. With reference to the fourth aspect or any one of the first to the third possible implementations of the fourth aspect, in a fourth possible implementation, the receiving unit is configured to receive at least two pieces of first signaling sent by the base station.

That the receiving unit is configured to receive second signaling sent by the base station includes:

receiving, by the receiving unit, at least one piece of second signaling in a time interval between moments at which the receiving unit receives two consecutive pieces of first signaling. With reference to the fourth aspect or any one of the first to the fourth possible implementations of the fourth aspect, in a fifth possible implementation, that the receiving unit is configured to receive second signaling sent by the base station includes:

the receiving unit is configured to periodically receive the second signaling sent by the base station. With reference to the fourth aspect or any one of the first to the fifth possible implementations of the fourth aspect, in a sixth possible implementation, the first signaling is higher layer signaling, and the second signaling is physical layer signaling. With reference to the fourth aspect or any one of the first to the fifth possible implementations of the fourth aspect, in a seventh possible implementation, the first signaling is DCI signaling. With reference to the fourth aspect or any one of the first to the seventh possible implementations of the fourth aspect, in an eighth possible implementation, the first signaling further includes a rank indication and/or the first signaling further includes the PMI2. The present invention further provides a physical apparatus for implementing the foregoing aspects, where the physical apparatus includes a receiving apparatus, a sending apparatus, and a memory. The present invention further provides a chip system for implementing the foregoing aspects, and a computer device.

In addition, the present invention further describes a plurality of hardware structures and chip systems, so as to implement the above-described summary of the present invention. Using the foregoing implementations can resolve a problem that a field in signaling is wasted in an uplink transmission manner of the base station, and further resolve a problem of insufficient accuracy of sending without increasing signaling.

## BRIEF DESCRIPTION OF DRAWINGS

FIG. 1 is a schematic diagram of a system network according to an embodiment of the present invention;
FIG. 2 is a schematic diagram of a time sequence of a signaling sending method according to an embodiment of the present invention;
FIG. 3 is a schematic diagram of a time sequence of a signaling sending method according to an embodiment of the present invention;
FIG. 4 is a schematic diagram of a time sequence of a signaling sending method according to an embodiment of the present invention;

FIG. 5 is a schematic flowchart of a signaling sending method according to an embodiment of the present invention;
FIG. 6 is a schematic flowchart of a signaling sending method according to an embodiment of the present invention;
FIG. 7 is a structural diagram of an apparatus for implementing signaling sending according to an embodiment of the present invention;
FIG. 8 is a structural diagram of an apparatus for implementing signaling sending according to an embodiment of the present invention;
FIG. 9 is a structural diagram of an apparatus for implementing signaling sending according to an embodiment of the present invention;
FIG. 10 is a structural diagram of an apparatus for implementing signaling sending according to an embodiment of the present invention; and
FIG. 11 is a structural diagram of a chip system for implementing signaling sending according to an embodiment of the present invention.

## DESCRIPTION OF EMBODIMENTS

The network architecture and the service scenario described in the embodiments of the present invention are intended to describe the technical solutions in the embodiments of the present invention more clearly, and do not constitute a limitation on the technical solutions provided in the embodiments of the present invention. A person of ordinary skill in the art may know that with the evolution of the network architecture and the emergence of new service scenarios, the technical solutions provided in the embodiments of the present invention are also applicable to similar technical problems.

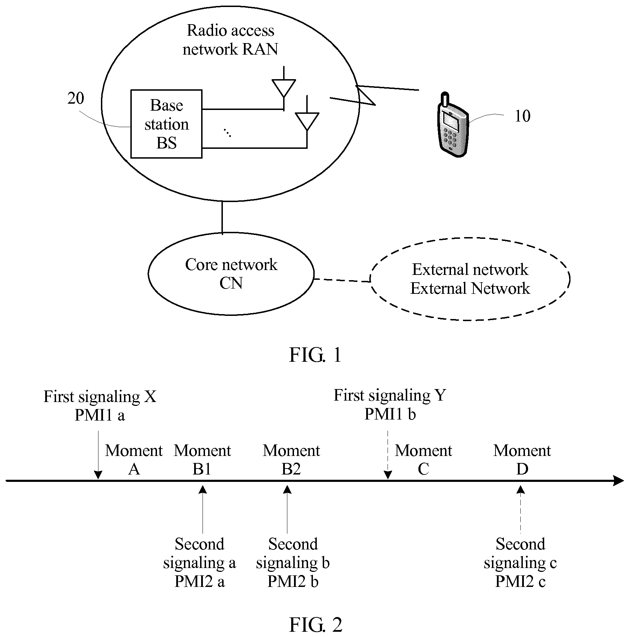

FIG. 1 is a schematic diagram of a possible system network in the present invention. As shown in FIG. 1, at least one user equipment UE 10 communicates with a radio access network (radio access network, RAN for short). The RAN includes at least one base station (base station, BS for short) 20. For clarity, only one base station and one UE are shown in the figure. The RAN is connected to a core network (core network, CN for short). Optionally, the CN may be coupled to one or more external networks (external network) such as the Internet and a public switched telephone network (public switched telephone network, PSTN for short).

For ease of understanding, some nouns used in this application are described below.

In this application, nouns "network" and "system" are usually interchangeably used, but a meaning of which may be understood by a person skilled in the art. User equipment (user equipment, UE for short) is a terminal device having a communication function, and may include a handheld device, a vehicle-mounted device, a wearable device, and a computing device that have a wireless communication function, another processing device connected to a wireless modem, or the like. The user equipment may have different names in different networks, for example, a terminal, a mobile station, a subscriber unit, a station, a cellular phone, a personal digital assistant, a wireless modem, a wireless communications device, a handheld device, a laptop computer, a cordless phone, and a wireless local loop station. For ease of description, in this application, these devices are simply referred to as user equipment or UE. The base station (base station, BS for short) may also be referred to as a base station device, and is a device deployed in the radio access network to provide a wireless communication function. The base station may have different names in different wireless access systems. For example, a base station in a universal mobile telecommunications system (Universal Mobile Telecommunications System, UMTS for short) network is referred to as a NodeB (NodeB), and a base station in an LTE network is referred to as an evolved NodeB (evolved NodeB, eNB or eNodeB for short).

In a system using a multiple-input multiple-output (Multiple Input Multiple Output, MIMO for short) technology, a plurality of transmit antennas and a plurality of receive antennas are used to send data or other information, so that a transmission rate of data or other information can be improved. When the base station serves as a receive end of a signal and the user equipment serves as a transmit end, a UE side needs to obtain channel information. A precoding matrix indication (precoding matrix indication, PMI for short) may be used as one type of such information, and may be sent by the base station to the user equipment UE.

The base station usually may determine the PMI by measuring a reference signal sent by the user equipment. Generally, there are a plurality of reference signals. For example, a sounding reference signal (sounding reference signal, SRS for short) may be used, or another reference signal such as a demodulation reference signal (demodulation reference signal, DMRS for short), another signal, or a combination of various types of signals may be used for measurement. There may be a plurality of specific measurement processes of the base station. One manner is traversal. For example, the UE determines all possible precoding matrices, precodes the reference signal by using these precoding matrices, and sends the precoded reference signal to the base station. The base station receives the reference signals corresponding to these precoding matrices, determines one or more optimal measurement results by calculating a signal-to-noise ratio or another parameter, determines an index corresponding to these precoding matrices, and then sends the index or the PMI corresponding to the index to the user equipment. It should be understood that the reference signals corresponding to these precoding matrices may be one or more reference signals. Another specific measurement process may be that the UE directly sends an unprecoded reference signal to the base station. The base station performs measurement to obtain channel state information, determines an optimal precoding matrix with reference to a data transmission mechanism used by the user equipment to send data to the base station, and sends the index PMI corresponding to the precoding matrix to the UE.

After receiving the PMI, the UE may determine a precoding matrix of uplink data or a precoding matrix of other uplink information based on the PMI. In a special case, the UE may precode the uplink data or the other uplink information only by referring to but not using the PMI. However, usually, the UE receives the PMI before precoding the data or the other uplink information. The purpose is to provide a reference for the UE to determine the precoding matrix.

It should be understood that there may be one or more PMIs, which may be determined by the UE and the base station by complying with a protocol or standard, or through mutual communication negotiation. For example, in a double codebook scenario of three-dimensional MIMO (3D-MIMO), a precoding matrix W may be represented in the following form:

$$W = W1 \times W2.$$

Corresponding to the foregoing formula, the quantity of the PMIs is two. PMI1 is associated with W1, and PMI2 is associated with W2. In an embodiment, PMI1 indicates a matrix W1 and PMI2 indicates a matrix W2. In this case, W1 is a long-term/broadband matrix, represents a long-term broadband characteristic of a channel, and reflects a long-term/average variation characteristic of a channel. W2 is a short-term/narrowband matrix, represents a short-term/narrowband characteristic of a channel, and reflects a short-term/instantaneous variation characteristic of a channel. For another example, in a case of a single codebook, there may be two or more PMIs. One PMI is used to indicate a matrix W in the codebook, and may be referred to as PMI1. Another PMI indicates that a row or a column of the matrix is selected, and may be referred to as PMI2. In an embodiment, a PMI3 may further be used with the PMI2 to respectively indicate that a row and a column of the matrix W are selected. In an LTE system, a case of a double codebook may be that one PMI indicates one parameter of the precoding matrix, and the other PMI indicates another parameter of the precoding matrix. For example,

| $i_1$ | $i_2$ 0 | 1 | 2 | 3 |
|---|---|---|---|---|
| 0 - 15 | $W^{(2)}_{2i_1,2i_1,0}$ | $W^{(2)}_{2i_1,2i_1,1}$ | $W^{(2)}_{2i_1+1,2i_1+1,0}$ | $W^{(2)}_{2i_1+1,2i_1+1,1}$ |
| $i_1$ | $i_2$ 4 | 5 | 6 | 7 |
| 0 - 15 | $W^{(2)}_{2i_1+2,2i_1+2,0}$ | $W^{(2)}_{2i_1+2,2i_1+2,1}$ | $W^{(2)}_{2i_1+3,2i_1+3,0}$ | $W^{(2)}_{2i_1+3,2i_1+3,1}$ |
| $i_1$ | $i_2$ 8 | 9 | 10 | 11 |
| 0 - 15 | $W^{(2)}_{2i_1,2i_1+1,0}$ | $W^{(2)}_{2i_1,2i_1+1,1}$ | $W^{(2)}_{2i_1+1,2i_1+2,0}$ | $W^{(2)}_{2i_1+1,2i_1+2,1}$ |
| $i_1$ | $i_2$ 12 | 13 | 14 | 15 |
| 0 - 15 | $W^{(2)}_{2i_1,2i_1+3,0}$ | $W^{(2)}_{2i_1,2i_1+3,1}$ | $W^{(2)}_{2i_1+1,2i_1+3,0}$ | $W^{(2)}_{2i_1+1,2i_1+3,1}$ |

$$W^{(2)}_{m,m',n} = \frac{1}{4}\begin{bmatrix} v_m & v_{m'} \\ \varphi_n v_m & -\varphi_n v_{m'} \end{bmatrix}$$

In the foregoing table, $i_1$ may be PMI1, and $i_2$ may be PMI2.

$$\varphi_n = e^{j\pi n/2}$$

$$v_m = \begin{bmatrix} 1 & e^{j2\pi m/32} & e^{j4\pi m/32} & e^{j6\pi m/32} \end{bmatrix}^{\mathrm{T}}$$

It should be understood that the foregoing expression form of the matrix W is intended to clearly reflect that in a precoding case, the matrix W is represented in a matrix form for easy understanding. There may be a plurality of actual implementations of the matrix W, and the embodiments of the present invention are applicable to any subsequent version and a new radio access system. For example, the matrix may be an array. In an embodiment, the array is stored in a chip or a storage medium after being specified jointly by a sender and a receiver in advance. This specification may be performed by complying with a protocol or through two-party or multi-party communication. An element in the matrix is associated with stored content, and a corresponding location is associated with a stored location. When the receive end and the transmit end implement a matrix operation, or in a decoding process of the receive end and in an encoding process of the transmit end, the receive end and the transmit end directly invoke data corresponding to a required location. A matrix may have different forms when the matrix is applied to different mathematical models. In an embodiment, the foregoing W1 may also be a short-term/narrowband matrix. In this case, W2 is a long-term/broadband matrix. It should be understood that, in this embodiment of the present invention, the form of the matrix is not limited to a precoding matrix form of the foregoing double codebook structure. In a single precoding matrix scenario, it may also be possible that two PMIs indicate one precoding matrix. Optionally, when two PMIs indicate one precoding matrix in the single codebook structure, a precoding matrix corresponding to one of the two precoding matrix indications may be an identity matrix.

The following specifically describes the embodiments of the present invention with reference to a specific example. In all the embodiments of the present invention, the network device may be a base station. It should be understood that the present invention may also support a device-to-device (Device to Device) scenario. In this scenario, the network device may be user equipment or another type of relay.

A first network device determines a first precoding matrix indication PMI1 and a second precoding matrix indication PMI2. This determining process may be determined through measurement or notified by another network side device. In an embodiment, the first network device receives the PMI1 and the PMI2. In another embodiment, the first network device measures a reference signal to obtain the PMI1 and the PMI2.

The network device determines the first precoding matrix indication PMI1 and the second precoding matrix indication PMI2, where the PMI1 and the PMI2 are used to indicate a precoding matrix. The network device sends first signaling to user equipment, where the first signaling includes the PMI1. The network device sends second signaling to the user equipment, where the second signaling includes the PMI2.

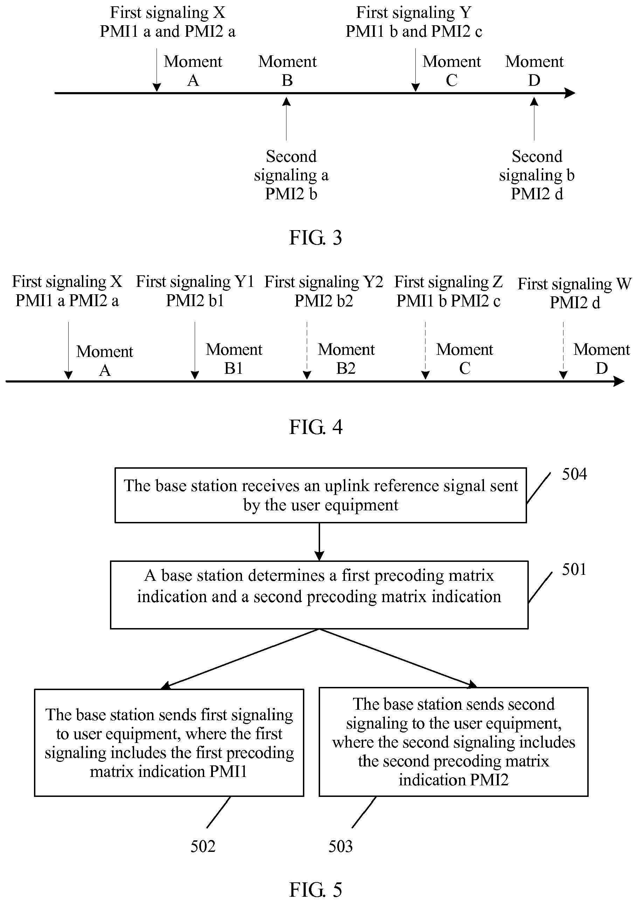

It should be understood that, in the embodiments of the present invention, the first signaling is signaling of a first type, and the first signaling is generally signaling that includes the PMI1. The second signaling is generally signaling that includes the PMI2, unless otherwise specified, for example, in the embodiment in FIG. 4. PMIs 1 of two pieces of first signaling sent at different moments are usually different. However, some cases are excluded, for example, a case in which the base station determines that the PMIs 1 included in first signaling sent at two moments are the same, or some cases in which sending is performed for a plurality of times to improve reliability. Two pieces of second signaling sent at different moments are also usually different. However, some cases are excluded, for example, a case in which the base station determines that PMIs 2 included in second signaling sent at two moments are the same, or some cases in which sending is performed for a plurality of times to improve reliability.

According to this implementation, when at least two PMIs are sent by the base station to the user equipment, the PMIs may be respectively indicated by using first signaling and second signaling. Because signaling characteristics are different, different signaling indicates PMIs of different characteristics, so that indication flexibility may be increased and a resource optimization effect may be achieved. It should be understood that a sequence of sending the first signaling and the second signaling may be determined based on a case, and this is not limited in the present invention.

The precoding matrix herein may be the above-described matrix used to precode to-be-transmitted data. For the user equipment, the precoding matrix is correspondingly used to send uplink data or signals. For different precoding matrix forms, different indication manners may be used. In an embodiment in a single codebook case, the PMI1 and the PMI2 are used to jointly indicate the first precoding matrix. In an embodiment in a double codebook case, the PMI1 is used to indicate one precoding matrix $W_a$, and the PMI2 is used to indicate the other precoding matrix $W_b$. In the double codebook case, the two codebooks may also be represented as one matrix $W_{ab} = f(W_a, W_b)$ in terms of expression. In this case, the PMI1 and the PMI2 are respectively corresponding to the precoding matrices $W_a$ and $W_b$. This indication manner may also be a form in which the PMI1 and the PMI2 jointly indicate a precoding matrix $W_{ab}$. Herein, f may be various calculation rules, for example, may be a matrix addition form or a matrix multiplication form $W_{ab} = W_a W_b$ or a matrix operation such as $W_{ab} = W_a^T W_b^T$ that includes matrix transpose and a like type. Alternatively, f may be a combination of the foregoing calculation rules and other selection manners, for example, some rows and/or columns are selected from the $W_a$ and some rows/or columns are selected from the $W_b$, and then a matrix operation is performed. In another embodiment, the PMI1 and the PMI2 may also be a column indication. For example, the precoding matrix is a submatrix of a discrete Fourier transform (DFT) matrix, where the DFT matrix is divided into at least two sets $\{\alpha_1\}$ ... $\{\alpha_n\}$. Each set includes at least two columns of the DFT matrix, the PMI1 is used to indicate a set $\{\alpha_k\}$ in a Fourier matrix, and the PMI2 indicates a precoding matrix formed according to an element combination manner in the set $\{\alpha_k\}$. In another embodiment, calculation of the $W_{ab} = f(W_a, W_b)$ may include a precoding submatrix other than the $W_a$ and the $W_b$. For example, a selection matrix $W_i$ may be added to indicate selection of a column of the $W_a$ and/or the $W_b$, or a different codebook representation manner may be determined based on a channel model and another requirement.

The foregoing examples describe representation manners of different PMIs. For different physical meanings of the PMIs, with reference to a signaling notification manner in the present invention, flexible and efficient technical effects can be achieved. The following provides more detailed description with reference to the embodiments.

In an implementation, in a double codebook structure designed based on a broadband characteristic and a narrowband characteristic, the base station may select a matrix of the broadband characteristic from one codebook based on the PMI1, and select a matrix of the narrowband characteristic from the other codebook based on the PMI2. The two codebooks may be a same codebook, or may be two codebooks with specific broadband and narrowband characteristics. Correspondingly, the base station may select a broadband characteristic codebook and a narrowband characteristic codebook from two different codebooks respectively, or from one common codebook, and then notify the UE of the PMI. The matrix of the broadband characteristic and the matrix of the narrowband characteristic jointly form the precoding matrix. In a specific implementation process, the base station may directly demodulate, in steps at the receive end, a received signal based on the matrix of the broadband characteristic corresponding to the PMI1 and the matrix of the narrowband characteristic corresponding to the PMI2, without a need to synthesize the jointly formed precoding matrix before demodulation. Therefore, when the PMI1 is used to indicate the matrix of the broadband characteristic, and when the PMI2 is used to indicate the matrix of the narrowband characteristic, the base station indicates the PMI1 by using higher layer signaling, and the base station indicates the PMI2 by using physical layer control information signaling. The matrix of the broadband characteristic associated with the PMI1 changes relatively slowly, to be specific, may not change during a period in which data is sent several times. However, the matrix of the narrowband characteristic associated with the PMI2 changes relatively quickly. Therefore, the base station indicates the PMI1 by using higher layer signaling, and the base station indicates the PMI2 by using media access control layer signaling or physical layer control information signaling. In an embodiment, the base station may perform indication by using DCI. According to the method in this embodiment, the matrix of the broadband characteristic and the matrix of the narrowband characteristic respectively cooperate with signaling of different characteristics, so that transmission efficiency of indication signaling may further be improved. Further, the signaling may be a combination of higher layer signaling and higher layer signaling, a combination of lower layer signaling and lower layer signaling, or a combination of higher layer signaling and lower layer signaling. Relative to the higher layer signaling, the lower layer signaling may also be the media access control (media access control, MAC) layer signaling or the physical layer signaling. The following table provides some possible implementations of the PMI1 and the PMI2.

| PMI1 | PMI2 |
|---|---|
| Higher layer signaling | Physical layer signaling |
| Higher layer signaling | MAC layer signaling |
| MAC layer signaling | MAC layer signaling |
| MAC layer signaling | Physical layer signaling |
| Physical layer signaling | Physical layer signaling |

In an embodiment, the higher layer signaling is radio resource control (radio resource control, RRC) signaling, layer 2 (Layer 2, L2) signaling, MAC control element (media access control control element, MAC CE) signaling, or the like. The physical layer signaling is downlink control information (downlink control information, DCI), downlink service information, or the like. The downlink control information may be transmitted on a downlink control channel or a downlink traffic channel. This is not specifically limited herein.

The signaling indication may also be used with another message or information, for example, the PMI1 is indicated by using signaling, and the PMI2 is indicated by using data. Optionally, the PMI1 and the RI may be indicated in physical layer control signaling, and the PMI2 is transmitted on a physical layer traffic channel.

In addition, the first signaling and the second signaling that are used to indicate the precoding matrix may be same layer signaling or any other signaling in the foregoing signaling, and this is not limited herein. Both the first signaling and the second signaling may be physical layer DCI signaling. Further, the physical layer DCI signaling may be single-level DCI signaling or may be two-level DCI signaling. When the physical layer DCI signaling is two-level DCI signaling, the first signaling corresponds to first-level DCI signaling in the two-level DCI signaling, and the second signaling corresponds to second-level DCI signaling in the two-level DCI signaling.

In an embodiment, the base station determines to indicate a plurality of PMI groups, and one PMI group is used to indicate a precoding matrix of one frequency resource. The PMI group includes at least one PMI, and may be of a single-codebook or multi-codebook structure described in this embodiment of the present invention. Therefore, each PMI group may be referred to as a frequency selective PMI. When a quantity of frequency selective PMIs indicated in the second signaling is greater than or equal to 1, the first signaling may further indicate a quantity of frequency selective PMIs that need to be indicated in the second signaling. For example, the first-level DCI signaling indicates the quantity of frequency selective PMIs and/or index information of a frequency selective subband (sub band) that need/needs to be indicated in the second-level DCI signaling. The subband herein is a frequency resource in total bandwidth, or is a part of a specified frequency resource width.

It should be understood that the present invention is not limited to the foregoing double codebook structure of the matrix of the broadband characteristic and the matrix of the narrowband characteristic, or may also be applicable to another scenario. When one of the PMI1 and the PMI2 has relatively high change frequency and the other of the PMI1 and the PMI2 has relatively low change frequency, the solution in this embodiment may be used. In an embodiment, the PMI1 is associated with a first frequency granularity, and the PMI2 is associated with a second frequency granularity. The association may be a mapping relationship between a PMI type and a frequency granularity. For example, the first frequency domain granularity corresponds to sizes of all resource blocks scheduled by a user, and the second frequency domain granularity corresponds to a subset of a resource area scheduled by the user. In an embodiment, because the PMI1 is associated with the first frequency domain granularity, for example, the first frequency domain granularity is full bandwidth or all resource blocks scheduled by the user, a quantity of PMIs 1 indicated by using the first signaling is usually 1. Because the PMI2 is associated with the second frequency domain granularity, for example, the second frequency domain granularity is some of all resource blocks scheduled by the UE, a quantity of PMIs 2 indicated by using the second signaling is usually greater than or equal to 1, and is related to sizes of resource blocks scheduled by the UE and the second frequency domain granularity. For example, when size of the resource block scheduled by the UE is 10 PRBs, and the second frequency domain granularity is 2 PRBs, the quantity of PMIs 2 that need to be indicated by using the second signaling is 5.

In still another embodiment, the following table is shown.

|  | PMI1 = 00 | PMI1 = 01 | PMI1 = 10 | PMI1 = 11 |
|---|---|---|---|---|
| PMI2 = 00 | $F(W_i, W_a)$ | $F(W_j, W_a)$ | $F(W_k, W_a)$ | $F(W_l, W_a)$ |
| PMI2 = 01 | $F(W_i, W_b)$ | $F(W_j, W_b)$ | $F(W_k, W_b)$ | $F(W_l, W_b)$ |
| PMI2 = 10 | $F(W_i, W_c)$ | $F(W_j, W_c)$ | $F(W_k, W_c)$ | $F(W_l, W_c)$ |
| PMI2 = 11 | $F(W_i, W_d)$ | $F(W_j, W_d)$ | $F(W_k, W_d)$ | $F(W_l, W_d)$ |

In the foregoing table, the PMI1 indicates that W1 is one of $W_i$, $W_j$, $W_k$, and $W_1$. The PMI2 indicates that W2 is one of $W_a$, $W_b$, $W_c$, and $W_d$. For example, if the base station indicates that a precoding matrix indication of an $s^{th}$ part of resource in an $r^{th}$ resource block is PMI1 = 00 and PMI2 = 11, according to the foregoing correspondence, the base station may use the precoding matrix $W = F(W_i, W_d)$ when transmitting the $s^{th}$ part of resource in the $r^{th}$ resource block. This is also an example of joint indication.

In another embodiment, when quantities of bits occupied by the PMI1 and the PMI2 are different, the base station may use different signaling indication solutions.

In another embodiment, the first signaling further includes the rank indication (rank indicator, RI). In another embodiment, the second signaling further includes the RI. When the first precoding matrix indication and the rank indication are both sent in the first signaling, a same bit field may be used to indicate both the rank indication and the PMI1. In other words, the base station may perform joint encoding and indication based on the rank indication and the first precoding matrix indication PMI1. When the first precoding matrix indication and the rank indication are both sent in the second signaling, different bit fields are used to respectively indicate the rank indication and the PMI1. In other words, the base station may perform independent encoding and indication based on the rank indication and the first precoding matrix indication PMI1.

As shown in the following table, each bit field obtained after joint encoding indicates both the rank indication and the first precoding matrix indication.

| Decimal representation of bits | Meaning |
|---|---|
| 0 | RI = 1: PMI1 = 0 |
| 1 | RI = 1: PMI1 = 1 |
| ... | ... |
| 23 | RI = 1: PMI1 = 23 |
| 24 | RI = 2: PMI1 = 0 |
| 25 | RI = 2: PMI1 = 1 |
| ... | ... |
| 39 | RI = 2: PMI1 = 15 |
| 40-63 | Reserved |

In another embodiment, there is only one indication of the precoding matrix. For example, when there is only the first precoding matrix indication and when the first precoding matrix indication and the rank indication are both sent in the second signaling, different bit fields are used to respectively indicate the rank indication and the PMI1. In other words, the rank indication and the first precoding matrix indication PMI1 are independently encoded and indicated. Herein, the quantity M of first precoding matrix indications that need to be indicated may be greater than 1. With reference to the foregoing subband embodiment, the M first precoding matrix indications correspond to M subbands scheduled by the user.

In another embodiment, the base station determines one PMI1, the base station determines at least two PMIs 2, and the at least two PMIs 2 are respectively PMI2-1 and PMI2-2. The PMI1 and the PMI2-1 are used to jointly indicate the first precoding matrix, and the PMI1 and the PMI2-2 are used to jointly indicate the second precoding matrix. The base station sends the first signaling and at least two pieces of second signaling, where the first signaling includes the first PMI, the second signaling includes the PMI2-1, and the third signaling includes the PMI2-2. Optionally, the PMI2-1 is associated with a first subband, the PMI2-2 is associated with a second subband, the first precoding matrix is a precoding matrix of the first subband, and the second precoding matrix is a precoding matrix of the second subband. In an embodiment, after the UE receives the first signaling and the second signaling, the UE sends information to the base station on the first subband based on the first precoding matrix, and the UE sends information to the base station on the second subband based on the second precoding matrix. It should be understood that a quantity of the subbands may be greater than 2. In another embodiment, the second signaling includes the PMI2-1, and that the third signaling includes the PMI2-2 may be replaced with that the second signaling includes the PMI2-1 and the PMI2-2. In an actual implementation process, if more subbands exist, the second signaling may further include more PMIs 2 associated with different subbands. In this case, after receiving the PMI1 and the PMIs 2 associated with different subbands, the UE may separately determine a precoding matrix of each subband.

It should be understood that the foregoing process of sending the first signaling and the foregoing process of sending the second signaling are interchangeable.

In still another embodiment, the first signaling may be periodically sent. To be specific, the first signaling may be sent at a determined moment based on a specific period, and the first signaling includes the PMI1. The periodic sending herein may be sending at least three pieces of first signaling, where a time difference $\Delta_{21}$ between a sending moment of the second piece of first signaling and the first piece of first signaling is equal to a time difference $\Delta_{32}$ between a sending moment of the third piece of first signaling and the second piece of first signaling. It should be understood that equality herein may be an equal subframe difference quantity, or an equal difference quantity calculated based on a time unit. In this case, the PMI1 may be updated based on a period of the first signaling. It should be understood that PMIs 1 included in pieces of first signaling adjacent to each other in terms of time may be different, so as to achieve an update effect. Certainly, in some cases, when determining that the PMI1 that needs to be sent this time is the same as the PMI1 that needs to be sent last time, the base station may send the first signaling, where the sent PMI1 included in the first signaling this time is the same as the last sent PMI1, an update may be stopped once, and a same PMI1 is not included in the first signaling, or the first signaling is not sent. In an embodiment on a user equipment side, if the user equipment does not send the first signaling at a moment of sending the first signaling in an agreed period, or the user equipment determines, after receiving the first signaling in the agreed period, that the first signaling does not include the PMI1, the user equipment still determines the precoding matrix based on the PMI1 last received before the moment. In addition, the base station may also aperiodically send the first signaling to the user equipment, and this is not limited herein.

In another embodiment, the base station sends at least one second signaling in a time interval between moments at which the base station sends two consecutive pieces of first signaling.

In another embodiment, the base station periodically sends the second signaling to the user equipment. The base station may respectively send the first signaling based on a period T1 and send the second signaling based on a period T2. When an association between the PMI1 and the PMI2 is relatively weak, the T1 and the T2 may be irrelevant. The base station may determine a sending period based on periodicity of the first signaling and/or the second signaling, or based on respective update frequency of the PMI1 and the PMI2. It should be understood that the sending period may be configured by a core network or another network element. In addition, the base station may also aperiodically send the second signaling to the user equipment, and this is not limited herein.

The application scenario in the present invention may also be a single-codebook multi-PMI scenario. In such a scenario, a plurality of PMIs may jointly indicate a single precoding matrix, or one PMI may indicate one precoding matrix, and another PMI may be used to select a row or a column of the indicated matrix, or provide another auxiliary function. For example, the foregoing precoding matrix is a case of a discrete Fourier transform. In some cases, the base station determines that a selected codeword does not need to be changed excessively and frequently. Correspondingly, PMI1 feedback does not need to be excessively frequent. As long as the PMI2 is sent quickly in a timely manner, the base station may instruct the UE to select an appropriate column from the matrix corresponding to the selected PMI1, so as to ensure communication quality and improve air interface efficiency.

It should be understood that the present invention is not limited to that the base station indicates only the PMI1 and the PMI2. In a multi-codebook case or a multi-PMI joint indication scenario, the quantity of the PMIs may be greater than 2, and the indication manner of the PMIs is similar to that in the foregoing embodiments, and different signaling to be used may be determined based on characteristics of different PMIs. For example, MAC layer signaling is used when the PMI1 is sent, physical layer signaling is used when the PMI2 is sent, and higher layer signaling is used when the PMI3 is sent. Alternatively, the first signaling may be used when the PMI1 is sent, and the second signaling may be used when the PMI2 and/or the PMI3 are/is sent.

The following describes a specific implementation of the present invention with reference to an example.

In a multi-panel scenario, a system may support three or more PMIs for precoding and sending. It is assumed that the PMIs are respectively a PMI1, a PMI2, and a PMI3. The base station determines the PMI1, the PMI2, and the PMI3 based on a historical measurement result actively or after receiving a reference signal. It should be understood that the base station may also be a relay device, relay user equipment, or another network device.

In a three-codebook case, there are a plurality of implementations. For example, the base station sends the PMI1 by using first signaling, sends the PMI2 by using second signaling, and sends the PMI3 by using third signaling. Specific signaling usage of the PMI1, the PMI2, and the PMI3 may be determined based on an actual situation. For example, the first signaling is higher layer signaling, the second signaling is MAC layer signaling, and the third signaling is physical layer signaling. When the first signaling is higher layer signaling, and the second signaling and the third signaling are physical layer signaling, the second signaling and the third signaling may be the same signaling, and both the PMI2 and the PMI3 are indicated in one piece of signaling. The following table shows more possible implementations.

| PMI1 | PMI2 | PMI3 | PMIs that can share an indication |
|---|---|---|---|
| Higher layer signaling | Higher layer signaling | Physical layer signaling | PMI1, PMI2 |
| Higher layer signaling | Higher layer signaling | MAC layer signaling | PMI1, PMI2 |
| Higher layer signaling | MAC layer signaling | MAC layer signaling | PMI2, PMI3 |
| Higher layer signaling | MAC layer signaling | Physical layer signaling | None |
| Higher layer signaling | Physical layer signaling | Physical layer signaling | PMI2, PMI3 |
| MAC layer signaling | MAC layer signaling | Physical layer signaling | PMI1, PMI2 |
| MAC layer signaling | Physical layer signaling | Physical layer signaling | PMI2, PMI3 |

The PMIs that can share an indication indicate PMIs that can be indicated by the base station by using same signaling. For example, when the PMI1 is higher layer signaling, and the PMI2 and the PMI3 are physical layer signaling, the PMI2 and the PMI3 may be indicated in one piece of signaling. Certainly, based on an actual use case, the base station may not indicate the PMI2 and the PMI3 in the same piece of signaling. In addition, the first signaling, the second signaling, and the third signaling that are used to indicate the precoding matrix, may be the same layer signaling, such as physical layer DCI signaling.

The following provides further description based on the fed-back time sequence. It should be understood that the description is merely an embodiment, and a sequence of sending various signaling may be a different sequence in actual sending and receiving processes, and this does not constitute a limitation on the present invention.

FIG. 2 is a time sequence diagram of sending two PMIs. PMIs that need to be indicated are respectively a PMI1 and a PMI2. The base station sends the PMI1 by using first signaling, and sends the PMI2 by using second signaling.

The base station sends first signaling X to the UE at a moment A, where the first signaling includes the PMI1 a. The base station sends second signaling a to the UE at a moment B1, where the second signaling a includes the PMI2 a. The first signaling and the second signaling are different types of signaling, so that a flexible configuration effect can be achieved. The UE may determine a precoding matrix based on the PMI1 a and the PMI2 a.

Because the PMI2 is updated rapidly, at a moment B2, the base station determines that the PMI2 needs to be updated, and the base station sends second signaling b to the UE, where the second signaling b includes the PMI2 b. The UE may determine a precoding matrix based on the PMI1 a and the PMI2 b. The second signaling a and the second signaling b herein may be signaling of one type, for example, the second signaling a and the second signaling b are DCI signaling, and are transmitted at different time. Similarly, the first signaling X and a subsequent first signaling Y are one type of signaling, and are transmitted at different time. In another embodiment, the second signaling a and the second signaling b are signaling of a same transport layer, for example, the second signaling a and the second signaling b are both MAC layer signaling and are distinguished from the first signaling, and the first signaling is physical layer signaling or higher layer signaling. In a similar case, the first signaling X and the first signaling Y may be signaling of a same type, or may be signaling of a same layer. Specific examples have been provided for an embodiment of a transport layer of the first signaling and the second signaling. Similar descriptions in subsequent embodiments have similar meanings.

At a moment C, because the PMI1 needs to be updated, the base station sends the first signaling Y to the UE. The first signaling Y includes the PMI1 b. The UE may determine a precoding matrix based on the PMI1 b and the PMI2 b. The first signaling X and the first signaling Y may be periodic so that scheduling resources are saved. In still another embodiment, the first signaling X and/or the first signaling Y may further include a rank indication RI. The rank indication and the PMI1 may be sent in one field to the UE. The update manner is flexible. For example, at a moment D, when the base station determines that the PMI2 c does not need to be updated or the base station determines that a value of the PMI2 c is the same as that of the PMI2 b fed back last time, the base station may not feed back the PMI2 c in the second signaling c. Alternatively, the base station feeds back a flag indicating that the precoding matrix is determined based on the last PMI. The same rule may be applied when the first signaling X is updated for the first signaling Y. In another embodiment, the second signaling b may feed back an offset relative to the second signaling a. Similarly, the first signaling Y may feed back an offset relative to the first signaling X. In this way, resources required for indication can be further reduced.

FIG. 3 is another time sequence diagram of feeding back two PMIs. At a moment A, the base station sends first signaling X to the UE, where the first signaling X includes a PMI1 a and a PMI2 a, and the UE may determine a precoding matrix based on the PMI1 a and the PMI2 a.

At a moment B, the base station sends second signaling a to the UE, where the second signaling a includes the PMI2 b, which is similar to that in the embodiment shown in FIG. 2, and the second signaling may include an offset relative to the PMI2 a in the first signaling. The UE determines a precoding matrix based on the PMI1 a and the PMI2 b. Optionally, at a moment C, the base station sends first signaling, and the first signaling includes the PMI1 b and the PMI2 c. It should be understood that the first signaling Y may be an offset based on a PMI1 value and/or a PMI2 value previously sent to the UE. In addition, when update is not required or an update value is the same as the PMI1 value and/or the PMI2 value previously notified, a corresponding precoding matrix indication may not be included in the first signaling Y. Because before the first signaling X is sent, the base station may have notified the UE of the PMI1 and/or the PMI2, in a proper case, the embodiment of the first signaling Y is also applicable to the first signaling X. In an embodiment, the RI is in the first signaling X, or the RI is in the first signaling Y1.

It should be understood that, although there is a time sequence relationship between the embodiments of the present invention, for example, the foregoing embodiments in FIG. 2 and FIG. 3, a notification sequence is not substantially limited. The base station notifies, on determined signaling based on a measurement result, the UE of the updated PMI, and the UE may determine a precoding matrix based on the last updated PMI1 and PMI2. In some cases, the UE may not use the PMI notified by the base station. For example, the UE uses a channel reciprocity characteristic to estimate a channel and a precoding matrix, but the PMI notified by the base station may provide a reference for the UE. In an embodiment, the first signaling and/or the second signaling may include a rank indication RI.

FIG. 4 shows still another embodiment of the present invention. FIG. 4 is a time sequence diagram of feeding back two PMIs. As shown in FIG. 4, at a moment A, the base station sends first signaling X to the UE, where the first signaling X includes a PMI1 a and the PMI2 a, the PMI1 a and the PMI2 a are used to indicate a precoding matrix W1, and the UE may determine a precoding matrix based on the PMI1 a and the PMI2 a. At a moment B1, the base station sends first signaling Y1 to the UE, where the second signaling includes the PMI2 b1, and the PMI1 a and the PMI2 b1 are used to indicate a precoding matrix W2. The UE may send uplink data based on the PMI1 a and the PMI2 b1.

Optionally, at a moment B2, the base station sends first signaling Y2 to the UE, where the first signaling Y2 includes a PMI2 b2, the PMI1 a and the PMI2 b2 are used to indicate the precoding matrix W2, and the UE may determine the precoding matrix based on the PMI1 a and the PMI2 b2. It should be understood that a process of sending the first signaling Y2 is optional, and the base station may determine, based on a situation, whether to update the PMI2 to the PMI2 b2.

Optionally, at a moment C, the base station sends first signaling Z to the UE, where the first signaling Z includes a PMI1 b and a PMI2 c, the PMI1 b and the PMI2 c are used to indicate the precoding matrix W1, and the UE may determine the precoding matrix based on the PMI1 b and the PMI2 c.

Optionally, at a moment D, the base station sends first signaling W to the UE, where the first signaling W includes a PMI2 d. If the base station updates the PMI1 b by using the first signaling Z, the PMI1 b and the PMI2 d are used to indicate the precoding matrix W1, and the UE may determine the precoding matrix based on the PMI1 b and the PMI2 c. If the base station does not update the PMI1 b by using the first signaling Z, the PMI a and the PMI2 d are used to indicate the precoding matrix W1, and the UE may determine the precoding matrix based on the PMI1 a and the PMI2 c. It should be understood that the first signaling X, Y1, Y2, Z, and W are signaling of a same type, for example, DCI signaling, or may be signaling of a same transport layer, for example, one of physical layer signaling, higher layer signaling, or MAC layer signaling.

According to the embodiment shown in FIG. 4, the base station sends fourth signaling to the UE at a first moment, and the base station sends fifth signaling to the UE at a second moment, where the fourth signaling includes a PMI1 and a PMI2, and the fifth signaling includes the PMI2. In an embodiment, the fourth signaling and the fifth signaling are signaling of a same type. In another embodiment, the fifth signaling includes only the PMI2. It should be understood that the including only the PMI2 indicates that a precoding matrix indication other than the PMI2 is not included. Responsively, after receiving the fourth signaling at the first moment, the UE may determine a precoding matrix based on the PMI1 and the PMI2 included in the fourth signaling, and after receiving the fifth signaling at the second moment, the UE may determine a precoding matrix based on the PMI1 included in the fourth signaling and the PMI2 included in the fifth signaling.

The following describes another implementation of the present invention with reference to the accompanying drawings. It should be understood that the embodiments of the present invention may be combined, deleted, and replaced based on an actual situation.

FIG. 5 is a specific implementation of the present invention. FIG. 5 describes an embodiment of the present invention from a perspective of a base station. The base station may also be relay user equipment or another network element or a network device.

Step 501: A base station determines a first precoding matrix indication and a second precoding matrix indication.

Step 502: The base station sends first signaling to user equipment, where the first signaling includes the first precoding matrix indication PMI1.

Step 503: The base station sends second signaling to the user equipment, where the second signaling includes the second precoding matrix indication PMI2.

It should be understood that interchangeability of a time sequence properly implemented in the foregoing embodiments is not limited in the present invention. For example, the foregoing implementations 502 and 503 are interchangeable.

In an embodiment, the PMI1 is associated with a first frequency granularity, the PMI2 is associated with a second frequency granularity, and the second frequency granularity is less than or equal to the first frequency granularity.

The PMI1 and the PMI2 may represent characteristics of different matrix designs. For example, the PMI1 is used to indicate a broadband characteristic of the precoding matrix, and the PMI2 is used to indicate a subband characteristic of the precoding matrix; or the PMI1 is used to indicate a long-term characteristic of the precoding matrix, and the PMI2 is used to indicate a short-term characteristic of the precoding matrix.

Optionally, the first signaling further includes a rank indication.

In an embodiment, the base station periodically sends the first signaling to the user equipment. In still another embodiment, the base station sends second signaling to the user equipment, where the base station sends at least one piece of second signaling in a time interval between moments at which the base station sends two consecutive pieces of first signaling. The two embodiments may be implemented in combination, to be specific, the at least one piece of second signaling is sent at a time interval of periodically sending the first signaling. In another embodiment, the base station periodically sends the second signaling to the user equipment. A period of sending the second signaling by the base station is the same as a period of sending the first signaling by the base station. In another embodiment, the period of sending the second signaling is different from the period of sending the first signaling, and the at least one piece of second signaling is included at the time interval of periodically sending the first signaling.

Specific signaling types of the first signaling and the second signaling have been described in detail in the foregoing embodiments. Details are not described herein again.

Before step 501, the method may further include step 504 in which the base station receives an uplink reference signal sent by the user equipment. In an embodiment of step 501, the base station determines the first precoding indication and the second precoding indication based on the uplink reference signal.

Using the foregoing implementations can resolve a problem that a field in signaling is wasted when the base station indicates an uplink transmission manner, for example, indicates precoding matrix indication information for uplink transmission, and further resolve a problem of insufficient accuracy of sending without increasing signaling.

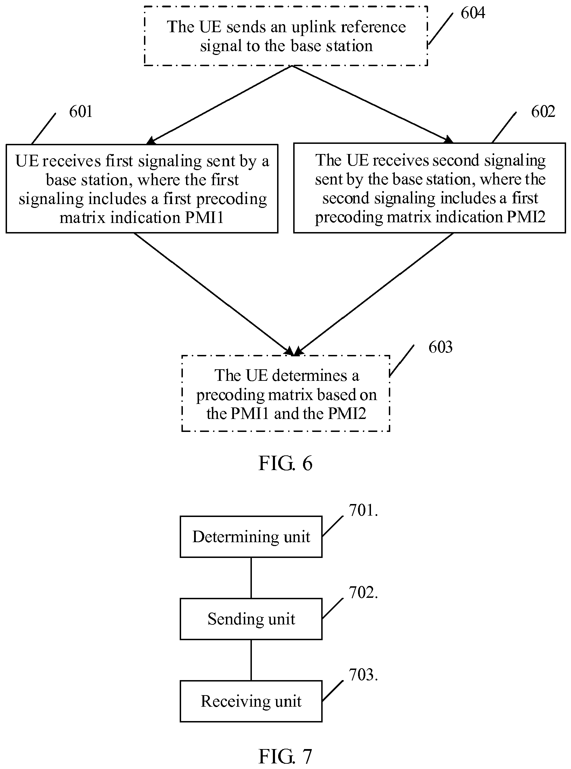

FIG. 6 shows a specific implementation of the present invention. FIG. 6 describes an embodiment of the present invention from a perspective of user equipment. The user equipment may be an internet of things device or another network element of a new radio access type.

Step 601: User equipment UE receives first signaling sent by a base station, where the first signaling includes a first precoding matrix indication PMI1.

Step 602: The UE receives second signaling sent by the base station, where the second signaling includes a first precoding matrix indication PMI2, and the PMI1 and the PMI2 are used to indicate a precoding matrix.

In an embodiment, the method further includes step 603 in which the user equipment UE determines the precoding matrix based on the PMI1 and the PMI2.

In an embodiment, the PMI1 is associated with a first frequency granularity, the PMI2 is associated with a second frequency granularity, and the second frequency granularity is less than or equal to the first frequency granularity. Specific solutions and implementations for the first frequency granularity and the second frequency granularity have been described in the foregoing embodiments. Details are not described herein again.

In an embodiment, the user equipment periodically receives the first signaling sent by the base station. In still another embodiment, the user equipment receives second signaling sent by the base station, and receives at least one piece of second signaling in a time interval between moments at which the user equipment receives two consecutive pieces of first signaling. The two embodiments may be combined, to be specific, the user equipment receives the at least one piece of second signaling at a time interval of receiving the periodically sent first signaling. In another embodiment, the user equipment periodically receives the second signaling. A period of receiving the second signaling may be the same as a period of receiving the first signaling. In another embodiment, the period of receiving the second signaling is different from the period of receiving the first signaling, and the at least one piece of second signaling is included at a time interval of periodically receiving the first signaling.

In an embodiment, the first signaling includes a rank indication RI. Specific signaling types of the first signaling and the second signaling have been described in detail in the foregoing embodiments. Details are not described herein again.

Before step 601, the method may further include step 604 in which the UE sends an uplink reference signal to the base station.

Using the foregoing implementations can resolve a problem that a field in signaling is wasted when the base station indicates an uplink transmission manner, for example, indicates precoding matrix indication information for uplink transmission, and further resolve a problem of insufficient accuracy of sending without increasing signaling.

FIG. 7 is a structural diagram of a network-side device apparatus according to the present invention. Specifically, FIG. 7 may show a base station. The apparatus includes a determining unit 701 and a sending unit 702. The determining unit is configured to determine a first precoding matrix indication PMI1 and a second precoding matrix indication PMI2, where the PMI1 and the PMI2 are used to indicate a precoding matrix. The sending unit 702 is configured to send first signaling to user equipment, where the first signaling includes the PMI1. The sending unit is further configured to send second signaling to the user equipment, where the second signaling includes the PMI2. The apparatus shown in FIG. 7 may implement related functions in FIG. 5, or may implement various implementations in the foregoing embodiments. Details are not described herein again. In an embodiment, the apparatus further includes a receiving unit 703, configured to receive an uplink reference signal sent by the UE. In another embodiment, the receiving unit is configured to receive configuration information, where the configuration information is used to indicate the PMI1 and the PMI2.

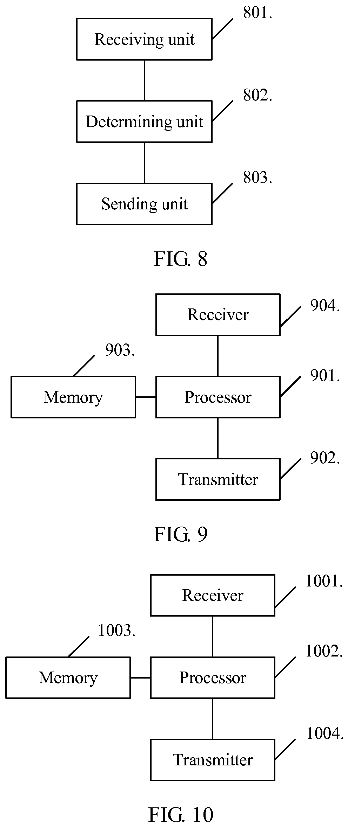

FIG. 8 is a structural diagram of a user equipment apparatus according to the present invention. The apparatus includes a receiving unit 801. The receiving unit is configured to receive first signaling sent by a base station, where the first signaling includes a first precoding matrix indication PMI1. The receiving unit is further configured to receive second signaling sent by the base station, where the second signaling includes a first precoding matrix indication PMI2, and the PMI1 and the PMI2 are used to indicate a precoding matrix. The user equipment further includes a determining unit 802, configured to determine the precoding matrix based on the PMI1 and the PMI2. The apparatus shown in FIG. 8 may implement related functions in FIG. 7, or may implement various implementations in the foregoing embodiments. Details are not described herein again. In an embodiment, the user equipment further includes a sending unit 803, configured to send an uplink reference signal. The determining unit 802 is further configured to precode uplink data based on the precoding matrix determined by the determining unit. The sending unit 803 is further configured to send the uplink data.

FIG. 9 is a structural diagram of still another network side apparatus according to the present invention. FIG. 9 may show a base station. The apparatus includes a processor 901 and a transmitter 902. The processor may implement related functions in FIG. 5, or may implement various implementations in the foregoing embodiments. In an embodiment, the processor may be connected to a memory 903, where the memory 903 is configured to store and execute code and data that are in the method embodiment shown in FIG. 5, and the processor 901 completes calculation. In an embodiment, the network side apparatus further includes a receiver 904, configured to receive an uplink reference signal sent by the UE. In an embodiment, the receiver is configured to receive configuration information, where the configuration information is used to indicate the PMI1 and the PMI2. In an embodiment, the processor may implement a function of the determining unit in FIG. 7, the transmitter may implement a function of the sending unit in FIG. 7, and the receiver may implement a function of the receiving unit in FIG. 7. The receiver and the transmitter may be a transceiver apparatus, such as an antenna apparatus or an antenna system.

FIG. 10 is a structural diagram of a user equipment apparatus according to the present invention. FIG. 10 may show user equipment. The apparatus includes a receiver 1001. The apparatus shown in FIG. 10 may implement related functions in FIG. 7, or may implement various implementations in the foregoing embodiments. In an implementation, the user equipment further includes a processor 1002, configured to determine a precoding matrix based on the PMI1 and the PMI2. In still another embodiment, the processor may be connected to a memory 1003, where the memory 1003 is configured to store and execute code and data that are in the method embodiment shown in FIG. 7, and the processor 1002 completes a calculation or determining step. In an embodiment, the user equipment further includes a transmitter 1004, configured to send an uplink reference signal. The processor 1002 is further configured to precode uplink data based on the determined precoding matrix. The transmitter 1004 is further configured to send the uplink data. It should be understood that the receiver and the transmitter in FIG. 9 and FIG. 10 may be a pair of a receive antenna and a transmit antenna, or may be an antenna or a panel array that implements both a receiving function and a transmitting function. In an embodiment, the processor may implement a function of the determining unit in FIG. 8, the transmitter may implement a function of the sending unit in FIG. 8, and the receiver may implement a function of the receiving unit in FIG. 8. The receiver and the transmitter may be a transceiver apparatus, such as an antenna apparatus or an antenna system.

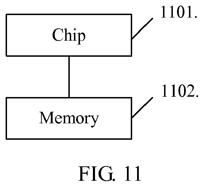

FIG. 11 is still another implementation of the present invention. FIG. 11 shows an integrated circuit system. The integrated circuit system includes a chip 1101 and a memory 1102, where the chip and the memory are welded to a circuit board, and the circuit board is located on a network side or a user equipment side. The memory 1102 is linked to the chip 1101 through integrated circuit cabling, and the chip reads or stores calculated data and instructions by using a link to the memory. A contact point between the chip and the integrated circuit is connected, and the chip is linked to another chip, a connector, or an antenna through cabling, so as to receive and send the data and the instruction. A specific link manner may be various high-speed or low-speed interfaces. The chip may be a chip having an X86 instruction set, an advanced RISC machine (advanced RISC machine, ARM) instruction set, or another instruction set, or may be a logic chip, such as a field programmable gate array (field programmable gate array, FPGA). The memory may be internal storage, a hard disk, an erasable FLASH chip, or the like. The integrated circuit system may implement functions of receiving the data, sending the data, and processing the data. For example, when the integrated circuit system is located on the network side, steps shown in FIG. 5 may be implemented. For example, the chip determines a first precoding matrix indication PMI1 and a second precoding matrix indication PMI2. The chip sends first signaling to user equipment, and the first signaling includes the PMI1. The chip sends second signaling to the user equipment, and the second signaling includes the PMI2. The PMI1 and the PMI2 are used to indicate a precoding matrix. The determining step may be performing measurement based on the received uplink reference signal, or directly receiving a measurement result sent by another measurement component, and then performing calculation based on the measurement result to determine the PMI1 and the PMI2. Specific calculation may be invoking the instruction and the data from the memory, for example, invoking a calculation manner and a prestored codebook. The base station performs a necessary operation of addition, subtraction, multiplication, or division by using a gate circuit, and another logical operation to determine the PMI1 and the PMI2, and then sends, by using an interface, the PMI1 and the PMI2 to another component that needs to perform processing, and the PMI1 and the PMI2 are finally sent to a terminal device. When the integrated circuit system is located on a terminal side, steps shown in FIG. 6 may be implemented, for example, receiving the first signaling sent by the base station, and receiving the second signaling sent by the base station. It should be understood that the receiving the first signaling sent by the base station, and receiving the second signaling sent by the base station may be specifically receiving the first signaling and the second signaling directly by using an interface, or may be receiving payload (payload) of the first signaling and the second signaling after processing performed by another component, and then reading a corresponding field from the payload after processing performed by the processor, to determine the PMI1 and the PMI2.

In still another embodiment of the present invention, a computer device may include a memory, a processor, and a computer program that is stored in the memory and that can run on the processor. When executing the program, the processor may implement steps in FIG. 2 to FIG. 6. A specific implementation may further be implemented with reference to a manner in FIG. 11.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid state disk Solid State Disk (SSD)), or the like.

**Claims**

1. A signaling sending method, wherein the method comprises:

   determining, by a base station, a first precoding matrix indication PMI1 and a second precoding matrix indication PMI2, wherein the PMI1 and the PMI2 are used to jointly indicate a precoding matrix;
   sending, by the base station, first signaling to user equipment, wherein the first signaling comprises the PMI1; and
   sending, by the base station, second signaling to the user equipment, wherein the second signaling comprises the PMI2.

2. The method according to claim 1, wherein the PMI1 is associated with a first frequency granularity, the PMI2 is associated with a second frequency granularity, and the second frequency granularity is less than or equal to the first frequency granularity.

3. The method according to claim 1 or 2, wherein the PMI1 is used to indicate a broadband characteristic of the precoding matrix, and the PMI2 is used to indicate a subband characteristic of the precoding matrix; or
   the PMI1 is used to indicate a long-term characteristic of the precoding matrix, and the PMI2 is used to indicate a short-term characteristic of the precoding matrix.

4. The method according to any one of claims 1 to 3, wherein the base station sends at least two pieces of first signaling to a user, and
   the sending, by the base station, second signaling to the user equipment comprises:
   sending, by the base station, at least one piece of second signaling in a time interval between moments at which the base station sends two consecutive pieces of first signaling.

5. The method according to any one of claims 1 to 4, wherein the first signaling is higher layer signaling or media access control element signaling, and the second signaling is physical layer signaling.

6. The method according to any one of claims 1 to 4, wherein the first signaling is DCI signaling.

7. The method according to any one of claims 1 to 6, wherein the first signaling further comprises a rank indication and/or the first signaling further comprises the PMI2.

8. The method according to any one of claims 1 to 7, wherein the second signaling further comprises a rank indication and/or the second signaling further comprises the PMI1.

9. The method according to any one of claims 1 to 8, wherein when the second signaling comprises the rank indication and the PMI2, different bit fields respectively indicate the rank indication and the PMI2.

10. A signaling receiving method, wherein the method comprises:

    receiving, by user equipment UE, first signaling sent by a base station, wherein the first signaling comprises a first precoding matrix indication PMI1; and
    receiving, by the UE, second signaling sent by the base station, wherein the second signaling comprises a first precoding matrix indication PMI2, wherein
    the PMI1 and the PMI2 are used to jointly indicate a precoding matrix.

**11.** The method according to claim 10, wherein the method comprises:
determining, by the user equipment, a precoding matrix based on the PMI1 and the PMI2.

**12.** The method according to claim 10 or 11, wherein the PMI1 is associated with a first frequency granularity, the PMI2 is associated with a second frequency granularity, and the second frequency granularity is less than or equal to the first frequency granularity.

**13.** The method according to any one of claims 10 to 12, wherein the UE receives at least two pieces of first signaling sent by the base station, and
the receiving, by the UE, second signaling sent by the base station comprises:
receiving, by the UE, at least one piece of second signaling in a time interval between moments at which the UE receives two consecutive pieces of first signaling.

**14.** The method according to any one of claims 10 to 13, wherein the first signaling is higher layer signaling or media access control element signaling, and the second signaling is physical layer signaling.

**15.** The method according to any one of claims 10 to 13, wherein the first signaling is DCI signaling.

**16.** The method according to any one of claims 10 to 15, wherein the first signaling further comprises a rank indication and/or the first signaling further comprises the PMI2.

**17.** The method according to any one of claims 10 to 16, wherein the second signaling further comprises a rank indication and/or the second signaling further comprises the PMI1.

**18.** The method according to any one of claims 10 to 17, wherein when the second signaling comprises the rank indication and the PMI2, different bit fields respectively indicate the rank indication and the PMI2.

**19.** A base station, comprising:

a determining unit, configured to determine a first precoding matrix indication PMI1 and a second precoding matrix indication PMI2, wherein the PMI1 and the PMI2 are used to jointly indicate a precoding matrix; and
a sending unit, configured to send first signaling to user equipment, wherein the first signaling comprises the PMI1, wherein
the sending unit is configured to send second signaling to the user equipment, wherein the second signaling comprises the PMI2.

**20.** The base station according to claim 19, wherein the PMI1 is associated with a first frequency granularity, the PMI2 is associated with a second frequency granularity, and the second frequency granularity is less than or equal to the first frequency granularity.

**21.** The base station according to claim 19 or 20, wherein the PMI1 is used to indicate a broadband characteristic of the precoding matrix, and the PMI2 is used to indicate a subband characteristic of the precoding matrix; or
the PMI1 is used to indicate a long-term characteristic of the precoding matrix, and the PMI2 is used to indicate a short-term characteristic of the precoding matrix.

**22.** The base station according to any one of claims 19 to 21, wherein the sending unit is configured to send at least two pieces of first signaling to a user, and
that the sending unit is configured to send second signaling to the user equipment comprises:
sending, by the sending unit, at least one piece of second signaling in a time interval between moments at which the sending unit sends two consecutive pieces of first signaling.

**23.** The base station according to any one of claims 19 to 22, wherein the first signaling is higher layer signaling or media access control element signaling, and the second signaling is physical layer signaling.

**24.** The base station according to any one of claims 19 to 22, wherein the first signaling is DCI signaling.

**25.** The base station according to any one of claims 19 to 24, wherein the first signaling further comprises a rank indication and/or the first signaling further comprises the PMI2.

26. The base station according to any one of claims 19 to 25, wherein the second signaling further comprises a rank indication and/or the second signaling further comprises the PMI1.

27. The base station according to any one of claims 19 to 26, wherein when the second signaling comprises the rank indication and the PMI2, different bit fields respectively indicate the rank indication and the PMI2.

28. User equipment UE, wherein the user equipment comprises:

a receiving unit, configured to receive first signaling sent by a base station, wherein the first signaling comprises a first precoding matrix indication PMI1; and
the receiving unit is configured to receive second signaling sent by the base station, wherein the second signaling comprises a first precoding matrix indication PMI2, wherein
the PMI1 and the PMI2 are used to jointly indicate a precoding matrix.

29. The user equipment according to claim 28, wherein the user equipment further comprises:
a determining unit, configured to determine a precoding matrix based on the PMI1 and the PMI2.

30. The user equipment according to claim 28 or 29, wherein the PMI1 is associated with a first frequency granularity, the PMI2 is associated with a second frequency granularity, and the second frequency granularity is less than or equal to the first frequency granularity.

31. The user equipment according to any one of claims 28 to 30, wherein the receiving unit is configured to receive at least two pieces of first signaling sent by the base station, and
that the receiving unit is configured to receive second signaling sent by the base station comprises:
receiving, by the receiving unit, at least one piece of second signaling in a time interval between moments at which the receiving unit receives two consecutive pieces of first signaling.

32. The user equipment according to any one of claims 28 to 31, wherein the first signaling is higher layer signaling or media access control element signaling, and the second signaling is physical layer signaling.

33. The user equipment according to any one of claims 28 to 31, wherein the first signaling is DCI signaling.

34. The user equipment according to any one of claims 28 to 33, wherein the first signaling further comprises a rank indication and/or the first signaling further comprises the PMI2.

35. The user equipment according to any one of claims 28 to 34, wherein the second signaling further comprises a rank indication and/or the second signaling further comprises the PMI1.

36. The user equipment according to any one of claims 28 to 35, wherein when the second signaling comprises the rank indication and the PMI2, different bit fields respectively indicate the rank indication and the PMI2.

Radio access
network RAN

20

Base
station
BS

10

Core network
CN

External network
External Network

FIG. 1

First signaling X
PMI1 a

First signaling Y
PMI1 b

Moment    Moment        Moment            Moment        Moment
A              B1                B2                  C                  D

Second            Second                              Second
signaling a      signaling b                         signaling c
PMI2 a            PMI2 b                              PMI2 c

FIG. 2

First signaling X
PMI1 a and PMI2 a

First signaling Y
PMI1 b and PMI2 c

Moment        Moment                   Moment      Moment
A              B                         C            D

Second
signaling a
PMI2 b

Second
signaling b
PMI2 d

FIG. 3

First signaling X    First signaling Y1    First signaling Y2    First signaling Z    First signaling W
PMI1 a PMI2 a        PMI2 b1             PMI2 b2       PMI1 b PMI2 c      PMI2 d

Moment          Moment          Moment         Moment         Moment
A              B1               B2              C              D

FIG. 4

The base station receives an uplink reference signal sent
by the user equipment       504

A base station determines a first precoding matrix
indication and a second precoding matrix indication       501

The base station sends first signaling
to user equipment, where the first
signaling includes the first precoding
matrix indication PMI1       502

The base station sends second
signaling to the user equipment,
where the second signaling includes
the second precoding matrix
indication PMI2       503

FIG. 5

The UE sends an uplink reference signal to the base station — 604

601

UE receives first signaling sent by a base station, where the first signaling includes a first precoding matrix indication PMI1

602

The UE receives second signaling sent by the base station, where the second signaling includes a first precoding matrix indication PMI2

603

The UE determines a precoding matrix based on the PMI1 and the PMI2

FIG. 6

701.
Determining unit

702.
Sending unit

703.
Receiving unit

FIG. 7

801.

Receiving unit

802.

Determining unit

803.

Sending unit

FIG. 8

904.

Receiver

903.

Memory

Processor

901.

Transmitter

902.

FIG. 9

1001.

Receiver

1003.

Memory

Processor

1002.

Transmitter

1004.

FIG. 10

FIG. 11

# INTERNATIONAL SEARCH REPORT

| | |
|---|---|
| International application No. | |
| | PCT/CN2018/080384 |

### A. CLASSIFICATION OF SUBJECT MATTER

H04B 7/0456 (2017.01) i

According to International Patent Classification (IPC) or to both national classification and IPC

### B. FIELDS SEARCHED

Minimum documentation searched (classification system followed by classification symbols)

H04B, H04L

Documentation searched other than minimum documentation to the extent that such documents are included in the fields searched

Electronic data base consulted during the international search (name of data base and, where practicable, search terms used)

CNABS; CNTXT; CNKI; SIPOABS; VEN; USTXT; WOTXT; EPTXT: 预编码, 矩阵, 指示, 索引, PMI, 秩, 基站, 发送, 信令, 频率, 宽带, 子带, 长期, 短期, 更新, precod+, matrix, indicat+, index, rank, base station, send+, transmit+, signal, frequency, wideband, subband, sub-band, long term, short term, updat+

### C. DOCUMENTS CONSIDERED TO BE RELEVANT

| Category* | Citation of document, with indication, where appropriate, of the relevant passages | Relevant to claim No. |
|---|---|---|
| X | CN 102868497 A (HUAWEI TECHNOLOGIES CO., LTD.), 09 January 2013 (09.01.2013), description, paragraphs [0031]-[0042], [0069]-[0118] and [0134]-[00160] | 1, 3, 5-11, 14-19, 21, 23-29, 32-36 |
| A | US 2008232501 A1 (NEC LAB AMERICA INC.), 25 September 2008 (25.09.2008), entire document | 1-36 |
| A | CN 101938336 A (ZTE CORP.), 05 January 2011 (05.01.2011), entire document | 1-36 |
| A | CN 102415041 A (QUALCOMM INC.), 11 April 2012 (11.04.2012), entire document | 1-36 |

☐ Further documents are listed in the continuation of Box C.　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| 10 May 2018 | 21 June 2018 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer CAI, Guoli Telephone No. 62411422 |
|---|---|

Form PCT/ISA/210 (second sheet) (January 2015)

## INTERNATIONAL SEARCH REPORT
### Information on patent family members

| | International application No. |
|---|---|
| | PCT/CN2018/080384 |

| Patent Documents referred in the Report | Publication Date | Patent Family | Publication Date |
|---|---|---|---|
| CN 102868497 A | 09 January 2013 | CN 102868497 B | 30 March 2016 |
| US 2008232501 A1 | 25 September 2008 | US 2011211651 A1 | 01 September 2011 |
| | | US 7839945 B2 | 23 November 2010 |
| | | US 8379753 B2 | 19 February 2013 |
| | | US 2012281776 A1 | 08 November 2012 |
| | | US 8917789 B2 | 23 December 2014 |
| CN 101938336 A | 05 January 2011 | WO 2012019451 A1 | 16 February 2012 |
| | | CN 101938336 B | 11 May 2016 |
| CN 102415041 A | 11 April 2012 | TW 201128990 A | 16 August 2011 |
| | | WO 2010124252 A3 | 23 June 2011 |
| | | CN 102415041 B | 28 January 2015 |
| | | WO 2010124252 A2 | 28 October 2010 |
| | | KR 101293140 B1 | 12 August 2013 |
| | | EP 2422484 A2 | 29 February 2012 |
| | | JP 2012525091 A | 18 October 2012 |
| | | US 2011110455 A1 | 12 May 2011 |
| | | KR 20120010266 A | 02 February 2012 |
| | | JP 2015065672 A | 09 April 2015 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710184942